Europäisches Patentamt

European Patent Office

Office européen des brevets

(11) Veröffentlichungsnummer: **0 241 410**
**A1**

## (12) EUROPÄISCHE PATENTANMELDUNG

(21) Anmeldenummer: 87730023.6

(22) Anmeldetag: **10.03.87**

(51) Int. Cl.⁴: **A 47 J 43/22**
A 47 J 45/06

(30) Priorität: **12.03.86 DE 8606744**

(43) Veröffentlichungstag der Anmeldung:
**14.10.87 Patentblatt 87/42**

(84) Benannte Vertragsstaaten:
**AT BE CH DE FR IT LI LU NL SE**

(71) Anmelder: **H. Zenker GmbH + Co. KG**
**Industriegelände Nord**
**D-8890 Aichach (DE)**

(72) Erfinder: **Zenker, Hermann**
**Oberbernbacherweg 2**
**D-8890 Aichach (DE)**

(74) Vertreter: **Christiansen, Henning, Dipl.-Ing. et al**
**CHRISTIANSEN & NINNEMANN Dietrich-Schäfer-Weg 21**
**D-1000 Berlin 41 (DE)**

Die Bezeichnung der Erfindung wurde geändert (Richtlinien für die Prüfung im EPA, A-III, 7.3).

(54) **Haushaltssieb, Spritzschutzdeckel o. dgl.**

(57) Die Erfindung betrifft ein Haushaltssieb 1, dessen Griff eine Drahtschlinge 25 ist. In diese Drahtschlinge 25 ist eine Handgriff einsetzbar, der eine flache Vertiefung 40 und Befestigungselemente 44 aufweist, die im eingebauten Zustand des Handgriffs Teile der Drahtschlinge 25 umfassen. Dadurch ist der Handgriff unabhängig von der Ausgestaltung der Drahschlinge 25 beliebig form- und gestaltbar. Er ist bei Beschädigung ersetzbar. Eine Erwärmung des Handgriffs wird vermieden. Der Handgriff ist fertigungstechnisch einfach herstellbar.

FIG.2

**Beschreibung**

Haushaltssieb, Spritzschutzdeckel o.dgl.

Gegenstand der Erfindung ist ein Haushaltssieb, Spritzschutzdeckel o.dgl. mit einem gewölbten oder ebenen Siebgewebe, das an einem Rahmen befestigt ist, der einen an einer Stelle des Rahmens unter Bildung einer als Handgriff dienenden Schlinge seitlich aus dem Rahmen austretenden Draht enthält.

Aus dem DE-GM l6 92 577 ist ein Rund- oder Ovalsieb bekannt, das aus einem mit einem Handgriff versehenen und eine Siebfläche tragenden Rahmen besteht. Der Rahmen weist einen entsprechend gebogenen Draht auf, an dem die Kante der Siebfläche mittels einer den Draht und diese Kante überdeckenden Blechrinne befestigt ist. Zusätzlich ist der Rahmen mit einem Handgriff und einem Auflageelement versehen, die aus dem Rahmen herausgebogen sind und zum Auflegen bzw. Halten des Rund- oder Ovalsiebes dienen. Die Drahtschlinge des Handgriffes umgibt ein flaches Holz- oder Kunststofformteil, das in der Ebene der Drahtschlinge angeordnet ist und eine umlaufende Nut aufweist, in der die Drahtschlinge im zusammengebauten Zustand angeordnet ist. Auf diese Weise ergibt sich eine Grifffläche, die die Handhabung des Siebes erleichtert.

Die Ausbildung des Handgriffes mit einer die Drahtschlinge umgebenden Griffplatte ist fertigungstechnisch schwierig herstellbar und schließt bei der Handhabung des Siebes die Gefahr ein, daß sich die Griffplatte aus der Drahtschlinge löst. Darüber hinaus ist im Falle der Beschädigung der Griffplatte kein Ersatz der Griffplatte möglich, so daß ein hinsichtlich seines Siebgewebes verwendbares Sieb ggf. vollständig ersetzt werden muß. Ein weiterer Nachteil des bekannten Siebes besteht darin, daß die Drahtschlinge außen um die Griffplatte verläuft, so daß beim Erhitzen des Siebgewebes im Gebrauch eine erhebliche Erwärmung des Handgriffes des bekannten Siebes gegeben ist.

Aufgabe der vorliegenden Erfindung ist es, ein Haushaltssieb der eingangs genannten Art zu schaffen, dessen Handgriff unabhängig von der Ausgestaltung der Drahschlinge beliebig form- und gestaltbar ist, der bei Beschädigung ersetzbar ist, bei dem eine Erwärmung des Handgriffes vermieden wird und bei dem der Handgriff fertigungstechnisch einfach herstellbar ist.

Diese Aufgabe wird erfindungsgemäß dadurch gelöst, daß der den Handgriff bildende Teil des Drahtes mit einer flachen, mit einer Vertiefung versehenen Handgriff-Abdeckkappe verbunden ist, wobei die Wandabschnitte der Vertiefung der äußeren Form der Schlinge des Drahtes angepaßt sind und wobei die Drahtschlinge in die Vertiefung eingelegt ist.

Die erfindungsgemäße Lösung schafft einen Handgriff für ein Haushaltssieb, der sich durch eine fertigungstechnisch einfache Herstellung auszeichnet, bei Beschädigung ohne weiteres ersetzbar und von der Form der Drahtschlinge unabhängig form- und gestaltbar ist, die Gefahr einer übermäßigen Erhitzung des Handgriffes ausschließt und geschlossenes, optisch schönes Aussehen vermittelt.

Vorteilhafte Ausgestaltungen der erfindungsgemäßen Lösung sind den Merkmalen der Ansprüche 2 bis 5 zu entnehmen.

Anhand eines in der Zeichnung dargestellten Ausführungsbeispieles soll der der Erfindung zugrundeliegende Gedanke näher erläutert werden. Es zeigen:

Fig. l eine Draufsicht auf ein Haushaltssieb mit einer Handgriff-Abdeckplatte;

Fig. 2 eine rückseitige Ansicht des Haushaltssieb-Handgriffes gemäß Fig l;

Fig. 3 eine Schnitt durch den Handgriff entlang der Linie A-A gemäß Fig. 2, und

Fig. 4 eine rückseitige Ansicht eines Handgriffes für ein Teesieb.

Das in Fig. l in der Draufsicht dargestellte Haushaltssieb weist in an sich bekannter Weise einen Rahmen 2 auf, der ein Siebgewebe l trägt, das wahlweise als Ebene oder gewölbte Siebfläche je nach Anwendungszweck zum Durchsieben von Materialien, als Spritzschutzdeckel o.dgl. ausgebildet sein kann. Das Siebgewebe kann aus einem Draht- oder Kunststoffgewebe oder einem gestanzten Lochblech be stehen.

Der Rahmen 2 besteht vorzugsweise aus einem entsprechend gebogenen Draht 2l, an dem die Kante des Siebgewebes l mittels eines den Draht 2l und die Kante des Siebgewebes l überdeckenden Umbörderlungsbleches 22 befestigt ist.

Der Rahmen 2 ist mit zwei Auflageelementen 23, 24 versehen, die beispielsweise dadurch gebildet werden können, daß der Draht 2l in entsprechender Weise an den Stellen der Auflageelemente 23, 24 schlingenförmig ausgebogen ist.

Zusätzlich ist der Rahmen 2 mit einem Handgriff 3 versehen, der an der Stelle 20 aus dem das Siebgewebe l aufnehmenden Rahmen 2 herausgebogen und im Bereich des Handgriffes 3 als Drahtschlinge ausgebildet ist.

Erfindungsgemäß ist die in Fig. l in der Draufsicht nicht näher zu erkennende Drahtschlinge von einer Handgriff-Abdeckplatte 4 umfaßt, deren äußere Form beliebig gestaltbar ist d.h. sie kann aus einem beliebigen Werkstoff hergestellt werden und unterschiedliche Farben oder Muster aufweisen. Die Handgriff-Abdeckplatte 4 ist zur besseren Handhabung mit einer Längsmulde 4l versehen, in der beispielsweise der Daumen des Benutzers ruhen kann. Zusätzlich ist die Handgriff-Abdeckplatte 4 mit einer Aussparung 42 versehen, mittels der das Haushaltssieb an einem Haken aufgehängt werden kann.

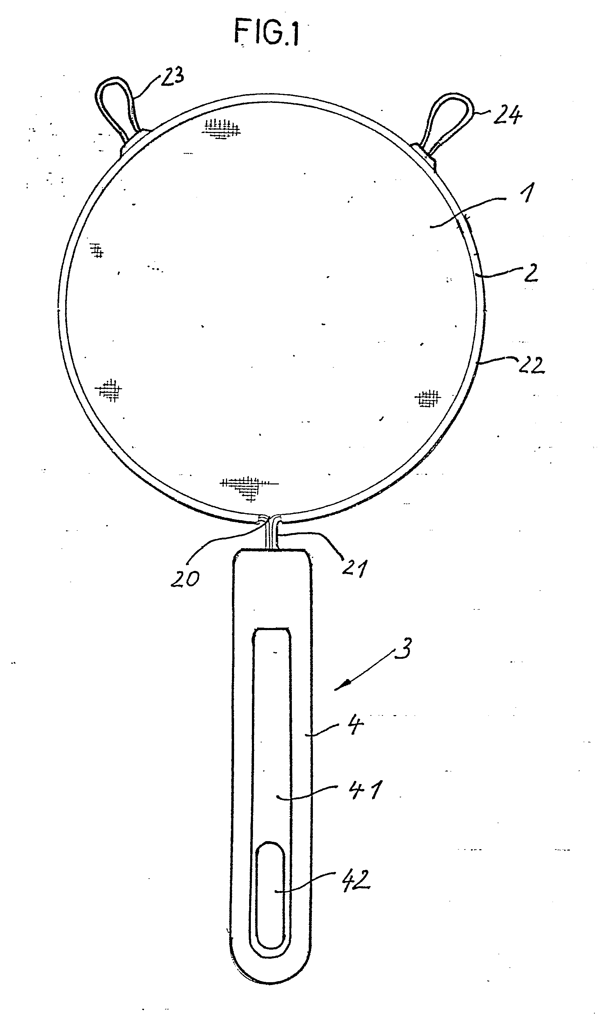

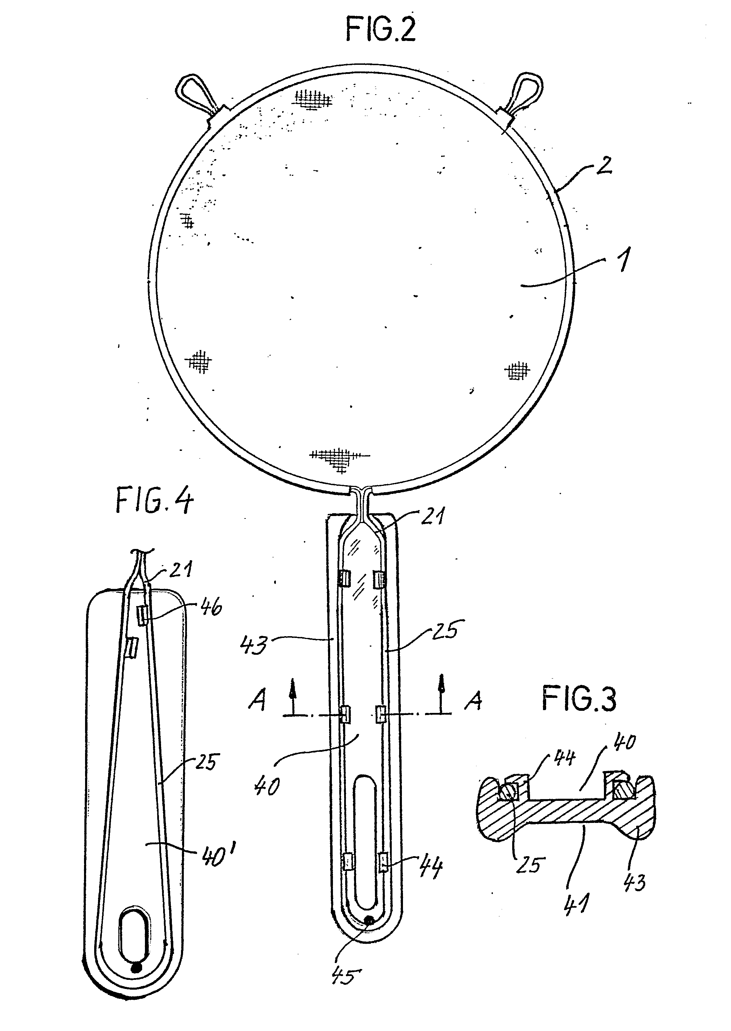

In der in Fig. 2 dargestellten Rückseitenansicht des Handgriffes 3 gemäß Fig. l sind nähere Einzelheiten der Verbindung der Drahtschlinge 25 des Drahres 2l mit der Handgriff-Abdeckplatte 4 zu erkennen.

Die in ihren äußeren Umrissen frei form- und gestaltbare Handgriff-Abdeckplatte 4 weist einen umlaufenden Wandabschnitt 43 auf, der mittig eine Vertiefung 40 ausbildet, deren Tiefe gleich dem Durchmesser des Drahtes 2l oder geringfügig größer ist. Der Wandabschnitt 43 ist dabei so geformt, daß er dem äußeren Umriß der Drahtschlinge 25 des Drahtes 2l entspricht und somit die Drahtschlinge 25 bündig umfaßt.

Vorzugsweise ist die Handgriffe-Abdeckplatte aus einem halbstarren Material wie beispielsweise Hart-PVC o.dgl. hergestellt, so daß eine form- und kraftschlüssige Verbindung mit der Drahtschlinge 25 herstellbar ist.

Zur Lagefixierung der Drahschlinge 25 in Bezug auf die Handgriff-Abdeckplatte ist ein Fixiernippel 45 an dem dem Siebgewebe entgegengesetzten Ende der Handgriff-Abdeckplatte 4 vorgesehen, der im zusammengesetzten Zustand an der Innenseite der Drahtschlinge 25 anliegt. Zusätzlich sind in der Vertiefung Befestigungselemente 44 vorgesehen, die vorzugsweise aus elastischen, hakenförmigen, aus der Ebene der Vertiefung 40 herausstehenden Elementen bestehen, die beim Einlegen der Drahtschlinge 25 federnd nachgeben und um die Drahtschlinge 25 im eingelegten Zustand der Drahtschlinge 25 schnappen, so daß eine feste form- und kraftschlüssige Verbindung zwischen der Drahtschlinge 25 und der Handgriff-Abdeckplatte 4 hergestellt ist.

Fig. 3 erläutert in einem Schnitt entlang der Linie A-A durch den Handgriff 3 gemäß Fig. 2 die Verbindung zwischen der Drahtschlinge 25 und der Handgriff-Abdeckplatte 4. Insbesondere wird die Anordnung und Befestigung der Drahtschlinge 25 innerhalb der durch den Wandabschnitt 43 und die elastischen, hakenförmigen Befestigungselemente 44 gebildeten Nut in der Vertiefung 40 verdeutlicht.

Zur Verbindung der Handgriff-Abdeckplatte 4 mit der einen Teil des Handgriffes 3 bildenden Drahtschlinge 25 des Drahtes 2l wird die flache Handgriff-Abdeckplatte mit der Längsmulde 4l nach oben gerichtet auf die Drahtschlinge 25 aufgesetzt und die Drahtschlinge in die Vertiefung 40 eingedrückt, innen ausweichen und bei vollständig innerhalb der Vertiefung 40 angeordneter Drahtschlinge 25 um die Drahtschlinge 25 bzw. den Draht 2l schnappen.

Aufgrund der federelastischen Eigenschaften der Befestigungselemente kann durch Ankippen die Handgriff-Abdeckplatte von der Drahtschlinge gelöst und jederzeit durch eine andere Handgriff-Abdeckplatte ersetzt werden.

In Fig. 4 ist ein Ausführungsbeispiel der erfindungsgemäßen Handgriffes für ein kleines Haushaltsieb, beispielsweise ein Teesieb dargestellt.

In Abwandlung zu dem vorstehend beschriebenen Ausführungsbeispiel verläuft die Vertiefung 40' nicht parallel zu den äußeren Wandabschnitten des Handgriffes, sondern verjüngt sich in Richtung auf das Siebgewebe, wobei im Bereich des Austritts des Drahtes 2l zwei Befestigungselemente 46 vorgesehen sind, die die Schlinge 25 des Drahtes 2l in ihrer Lage fixieren.

Auf diese Weise ist es möglich, fertigungstechnisch in einem Vorgang das Haushaltssieb mit sämtlichen Metallteilen herzustellen und im Anschluß daran die unabhängig hiervon in einem Kunststoffguß- oder Preßvorgang hergestellte Handgriff-Abdeckplatte mit der Drahtschlinge zur Formung des Handgriffes des Haushaltssiebes zu verbinden. Neben der fertigungstechnischen Vereinfachung ergibt sich darüber hinaus die Möglichkeit, daß im Handel Haushaltssiebe ausschließlich mit einer Drahtschlinge als Handgriff versehen angeboten werden, zu denen getrennt Handgriff-Abdeckplatten angeboten werden, die je nach Geschmack des Benutzers, d.h. je nach der gewünschten Form und Farbe zu den betreffenden Haushaltssieben ausgewählt werden können und vom Benutzer mit der Drahtschlinge des Handgriffes verbunden werden.

Durch einfaches Lösen der Handgriff-Abdeckplatte von der Drahtschlinge lassen sich leicht Verunreinigungen des Handgriffes beseitigen und der Handgriff bei einer Beschädigung der Handgriff-Abdeckplatte jederzeit erneuern.

Die um die Drahtschlinge 25 verlaufende Handgriff-Abdeckplatte 4 stellt darüber hinaus sicher, daß der Benutzer nicht mit den metallischen Teilen des Haushaltssiebes in Berührung kommen, so daß auch bei starker Erhitzung des Siebgewebes beispielsweise mit heißem Wasse keinerlei Gefahr besteht, daß sich der Benutzer verbrennt.

Schließlich ergibt sich aus der Gestaltung des Handgriffes ein gefälliges Äußeres, wobei die gestalterischen Möglichkeiten bezüglich des Handgriffes durch entsprechende Formung der Handgriff-Abdeckplatte groß sind.

**Patentansprüche**

I. Haushaltssieb, Spritzschutzdeckel o.dgl. mit einem gewölbten, oder ebenen Siebgewebe, das an einem Rahmen befestigt ist, der einen an einer Stelle des Rahmens unter Bildung einer als Handgriff dienenden Schlinge seitlich aus dem Rahmen austretenden Draht enthält,
dadurch gekennzeichnet, daß der den Handgriff (3) bildende Teil des Drahtes (2l) mit einer flachen, mit einer Vertiefung (40) versehenen Handgriff-Abdeckkappe (4) verbunden ist, wobei dei Wandabschnitte (43) der Vertiefung (40) der äußeren Form der Schlinge (25) des Drahtes (2l) angepaßt sind und wobei die Drahtschlinge (25) in die Vertiefung (40) eingelegt ist.

2. Haushaltssieb nach Anspruch I,
dadurch gekennzeichnet, daß in der Vertiefung (40) mehrere elastische, hakenförmige Befestigungselemente (44) vorgesehen sind, die im zusammengebauten Zustand des Haushaltssiebes Teile der Drahtschlinge (25) umfassen.

3. Haushaltssieb nach Anspruch I oder 2,
dadurch gekennzeichnet, daß die Handgriff-Abdeckplatte (4) an dem dem Siebgewebe (l) entgegengesetzten Ende eine Aussparung (42) aufweist.

4. Haushaltssieb nach einem der vorstehenden Ansprüche,

dadurch gekennzeichnet, daß die Vertiefung (40) der Handgriff-Abdeckplatte (4) an der Unterseite des Handgriffes (3) angeordnet ist und daß die Handgriff-Abdeckplatte (4) auf ihrer Oberseit eine Längsmulde (4l) aufweist.

5. Haushaltssieb nach einem der vorstehenden Ansprüche,
dadurch gekennzeichnet, daß die Handgriff-Abdeckplatte aus einem Kunststoff-Formteil besteht.

0241410

# FIG.1

FIG.2

U241410

FIG.4

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 784 651 (PARKINSON AND COWAN LTD) * Seite 1, Zeilen 75-87; Figuren 1-4 * | 1,4,5 | A 47 J 43/22 A 47 J 45/06 |
| | --- | | |
| X | GB-A-1 032 717 (AKTIEBOLAGET HARNY) * Figuren 5,6; Seite 1, Zeilen 68-84 * | 1 | |
| | --- | | |
| A | DE-U-1 994 769 (SOBELCOR) * Insgesamt * | 1,3,5 | |
| | --- | | |
| A | DE-U-7 036 641 (WINKELHARDT GmbH) * Insgesamt * | 1,3,5 | |
| | --- | | **RECHERCHIERTE SACHGEBIETE (Int. Cl.4)** |
| A | US-A-1 781 583 (HODGSON) | | A 47 J A 45 C B 65 D |
| | ----- | | |

Der vorliegende Recherchenbericht wurde für alle Patentansprüche erstellt.

| Recherchenort DEN HAAG | Abschlußdatum der Recherche 16-06-1987 | Prüfer SCHARTZ J. |
|---|---|---|